# FASCICULE DE BREVET EUROPEEN

(11) **EP 3 916 462 B1**
(45) Date de publication et mention de la délivrance du brevet: **01.11.2023**
(21) Numéro de dépôt: 21174542.7
(22) Date de dépôt: 18.05.2021
(51) Int. Cl.: G02B 17/06, G02B 23/04, G02B 23/06, G02B 27/10, G02B 27/14

(54) **INSTRUMENT OPTIQUE A FONCTION DE TELESCOPE ET A VOIES MULTIPLES**
OPTISCHES INSTRUMENT MIT TELESKOPFUNKTION UND MEHREREN KANÄLEN
OPTICAL INSTRUMENT WITH TELESCOPE FUNCTION AND MULTIPLE CHANNELS

(30) Priorité: 26.05.2020 FR 2005561
(43) Date de publication de la demande: 01.12.2021
(73) Titulaire: Airbus Defence and Space SAS, 31402 Toulouse Cedex 4 (FR)
(72) Inventeur: PASTERNAK, Frédéric, 31402 TOULOUSE CEDEX 4 (FR)
(74) Mandataire: Plasseraud IP

(56) Documents cités:
- CN-A- 109 870 804
- CN-B- 103 278 916
- FR-A1- 3 042 042
- US-A1- 2012 038 812
- TANIKAWA K ET AL: "SIX BAND MULTISPECTRAL SENSOR USING OFF-AXIS THREE-MIRROR REFLECTIVE OPTICS", OPTICAL ENGINEERING, SOC. OF PHOTO-OPTICAL INSTRUMENTATION ENGINEERS, BELLINGHAM, vol. 39, no. 10, 1 octobre 2000 (2000-10-01), pages 2781-2788, XP000969385, ISSN: 0091-3286, DOI: 10.1117/1.1290459
- ROSSI M. ET AL: "Cost-effective multispectral three-mirrors anastigmat sensor for high-performance surveillance applications using electroformed free-form mirrors", OPTOELECTRONIC SIGNAL PROCESSING FOR PHASED-ARRAY ANTENNAS IV, vol. 8713, 31 mai 2013 (2013-05-31), XP055775289, ISSN: 0277-786X, DOI: 10.1117/12.2017740

## Description

### Domaine technique

La présente description concerne un instrument optique à fonction de télescope et à voies multiples.

### Technique antérieure

Des télescopes à trois miroirs sont très utilisés pour former des images à l'intérieur d'un plan focal, avec des aberrations optiques qui sont réduites ou très réduites. Selon la terminologie usuelle, un tel télescope comprend un miroir primaire qui forme une image intermédiaire d'un contenu du champ optique d'entrée du télescope, un miroir secondaire et un miroir tertiaire. Les miroirs secondaire et tertiaire constituent un ensemble ré-imageur, qui forme l'image utile dans le plan focal du télescope à partir de l'image intermédiaire. Autrement dit, l'image utile est conjuguée optiquement avec l'image intermédiaire par le miroir secondaire et le miroir tertiaire. Un capteur d'images est alors disposé dans le plan focal du télescope, pour saisir l'image utile.

Mais certaines applications nécessitent de saisir simultanément plusieurs images utiles, chacune dans une bande spectrale différente. Pour cela, plusieurs voies optiques séparées sont prévues en aval du télescope, en utilisant des diviseurs de faisceaux tels que des dispositifs de séparation spectrale et/ou des filtres appropriés. Chaque voie optique forme une image séparée du plan focal du télescope, et filtre le rayonnement qui parvient jusqu'à cette image du plan focal conformément à une seule des bandes spectrales. Un capteur d'images qui est dédié séparément à chaque bande spectrale est alors placé dans l'image correspondante du plan focal du télescope. Mais il est alors nécessaire d'adapter le grandissement de chaque voie optique au pas et à la taille de son capteur d'images, ce qui nécessite d'inclure dans chaque voie optique une optique supplémentaire de ré-imagerie.

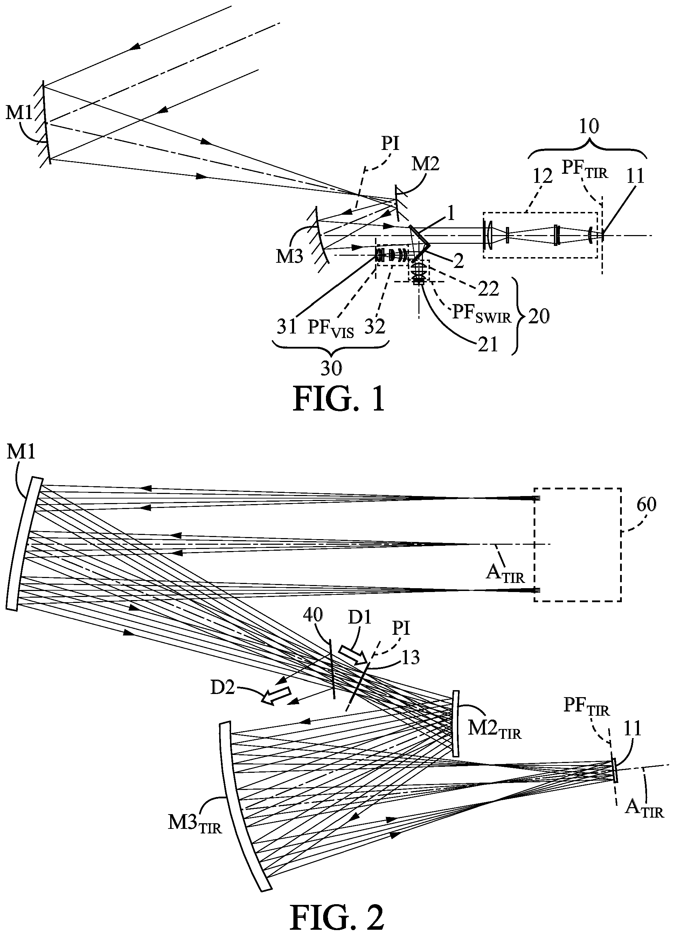

[Fig. 1] montre un tel télescope qui est combiné en sortie avec trois voies optiques séparées. Les références indiquées dans cette figure ont les significations suivantes :
M1, M2, M3 : miroir primaire, secondaire, tertiaire, respectivement, du télescope
PI : plan d'image intermédiaire, qui contient l'image intermédiaire du contenu du champ optique d'entrée du télescope, telle que formée par le miroir primaire M1
1: premier dispositif de séparation spectrale, par exemple un miroir dichroïque
10 : première voie optique, pouvant être dédiée à une bande spectrale de rayonnement infrarouge thermique, désignée par TIR
PF_{TIR} : plan focal de la voie optique 10
11 : capteur d'images de la voie optique 10
12 : optique de ré-imagerie dédiée à la voie optique 10, supplémentaire par rapport aux miroirs M2 et M3
2: second dispositif de séparation spectrale, par exemple un autre miroir dichroïque
20 : deuxième voie optique, pouvant être dédiée à une bande spectrale de rayonnement infrarouge à courte longueur d'onde, désignée couramment par SWIR, et proche-infrarouge, désignée couramment par NIR,
PF_{SWIR} : plan focal de la voie optique 20
21 : capteur d'images de la voie optique 20
22 : optique de ré-imagerie dédiée à la voie optique 20, supplémentaire par rapport aux miroirs M2 et M3
30 : troisième voie optique, pouvant être dédiée à une bande spectrale de rayonnement visible, notée VIS
PF_{VIS} : plan focal de la voie optique 30
31 : capteur d'images de la voie optique 30
32 : optique de ré-imagerie dédiée à la voie optique 30, supplémentaire par rapport aux miroirs M2 et M3

[Fig. 1] montre en outre des rayons lumineux provenant d'un élément de scène qui est situé à grande distance du télescope. Ces rayons forment un faisceau de lumière parallèle qui est incident sur le miroir primaire M1, converge en un point-image unique dans le plan d'image intermédiaire Pl, puis converge de nouveau simultanément sur chacun des capteurs d'images 11, 21 et 31.

Mais les optiques de ré-imagerie supplémentaires 12, 22 et 32 provoquent une augmentation importante de la complexité globale de l'instrument optique, de son encombrement, de sa masse et de son coût. Or l'encombrement et la masse de l'instrument sont des inconvénients importants si l'instrument est destiné à être installé à bord d'un satellite. En outre, lorsque les optiques de ré-imagerie supplémentaires 12, 22 et 32 comportent des éléments dioptriques, ceux-ci présentent des chromatismes qui dégradent la qualité des images saisies.

Par ailleurs, pour certaines applications, des exigences de performances radiométriques nécessitent de mettre en oeuvre des pupilles de grandes dimensions. Il n'est alors plus possible d'utiliser des optiques de ré-imagerie supplémentaires qui soient séparées pour toutes les bandes spectrales. Des télescopes connus dans l'art antérieur sont également divulgués dans les documents US 2012/038812 et CN 109 870 804.

### Problème technique

A partir de cette situation, un but de la présente invention est de proposer un nouvel instrument optique à fonction de télescope et à voies multiples, qui ne présente pas les inconvénients précités.

Plus particulièrement, l'invention a pour but de fournir un instrument optique à fonction de télescope qui soit pourvu de plusieurs voies optiques, dédiées à des bandes spectrales différentes, tout en étant dépourvu d'optiques de ré-imagerie supplémentaires par rapport aux miroirs du télescope.

Des buts annexes de l'invention consistent à réduire l'encombrement global, la masse, le nombre de composants et le coût de l'instrument optique.

### Résumé de l'invention

Pour atteindre l'un au moins de ces buts ou un autre, l'invention propose un nouvel instrument optique à fonction de télescope et à voies multiples, qui est adapté pour former simultanément deux images à partir d'un rayonnement qui provient d'un même champ optique d'entrée, mais qui appartiennent à deux bandes spectrales différentes, une image par bande spectrale. Cet instrument optique de l'invention comprend :
- un miroir primaire, de type concave, qui possède une valeur de longueur focale et qui est adapté pour former une image intermédiaire d'un contenu du champ optique d'entrée ;
- un premier ensemble ré-imageur, qui comprend un premier miroir secondaire et un premier miroir tertiaire, et qui est adapté pour former une première image utile du contenu du champ optique d'entrée dans un premier plan focal de l'instrument optique, l'image intermédiaire étant située entre le miroir primaire et le premier miroir secondaire le long d'un trajet des rayonnements dans l'instrument optique, la première image utile étant conjuguée optiquement avec l'image intermédiaire par le premier miroir secondaire et le premier miroir tertiaire ; et
- un dispositif de séparation spectrale, qui est adapté pour diriger selon une première direction d'émergence une partie du rayonnement appartenant à une première des deux bandes spectrales sélectivement par rapport à une autre partie du rayonnement appartenant à une seconde des deux bandes spectrales, et pour diriger selon une seconde direction d'émergence l'autre partie du rayonnement appartenant à la seconde bande spectrale sélectivement par rapport à la partie du rayonnement appartenant à la première bande spectrale.

Selon une première caractéristique de l'invention, le dispositif de séparation spectrale est situé sur le trajet du rayonnement entre le miroir primaire et le premier miroir secondaire, à une distance du miroir primaire qui est comprise entre 0,7 et 1,3 fois la valeur de longueur focale de ce miroir primaire. En outre, le premier ensemble ré-imageur est situé en aval du dispositif de séparation spectrale dans la première direction d'émergence, de sorte que la première image utile soit formée sélectivement par la partie du rayonnement qui appartient à la première bande spectrale. Le miroir primaire, le premier miroir secondaire et le premier miroir tertiaire forment ainsi un premier télescope qui est effectif pour la première bande spectrale. De préférence, le dispositif de séparation spectrale peut être situé sur le trajet du rayonnement entre le miroir primaire et le premier miroir secondaire, à une distance du miroir primaire qui est comprise entre 0,8 et 1,2 fois la valeur de longueur focale de ce miroir primaire. De façon encore plus préférée, cette distance entre le miroir primaire et le dispositif de séparation spectrale peut être comprise entre 0,8 et 1,0 fois la valeur de longueur focale du miroir primaire.

Selon une seconde caractéristique de l'invention, l'instrument optique comprend en outre :
- un second ensemble ré-imageur, qui comprend un second miroir secondaire et un second miroir tertiaire, et qui est adapté pour former une seconde image utile du contenu du champ optique d'entrée dans un second plan focal de l'instrument optique, cette seconde image utile étant conjuguée optiquement avec l'image intermédiaire par le dispositif de séparation spectrale, le second miroir secondaire et le second miroir tertiaire, le second ensemble ré-imageur étant situé en aval du dispositif de séparation spectrale dans la seconde direction d'émergence, de sorte que la seconde image utile soit formée sélectivement par l'autre de partie du rayonnement, celle qui appartient à la seconde bande spectrale. Ainsi, le miroir primaire, le second miroir secondaire et le second miroir tertiaire forment un second télescope qui est effectif pour cette seconde bande spectrale.

Autrement dit, l'instrument optique de l'invention est un regroupement de deux télescopes qui partagent le même miroir primaire, et dont les parties de télescope qui sont séparées sont combinées avec ce miroir primaire unique par le dispositif de séparation spectrale. Les deux voies optiques sont séparées l'une de l'autre entre le miroir primaire et les miroirs suivants par le dispositif de séparation spectrale. De cette façon, la fonction de ré-imagerie pour adapter une valeur de grandissement d'image séparément pour chaque voie optique peut être remplie par les miroirs secondaire et tertiaire de cette voie optique, en plus de la fonction de ré-imagerie de ces miroirs secondaire et tertiaire au sein du télescope correspondant. Une telle conception d'instrument optique à fonction de télescope et à au moins deux voies optiques permet de réduire le nombre de composants optiques nécessaires, ainsi que son encombrement global et sa masse.

Ainsi, les premier et second ensembles ré-imageurs peuvent avoir des valeurs respectives de grandissement qui sont différentes, ces valeurs de grandissement étant définies entre l'image intermédiaire et la première image utile pour le premier ensemble ré-imageur, et entre l'image intermédiaire et la seconde image utile pour le second ensemble ré-imageur. Il est donc possible d'adapter, séparément pour chacune des deux voies optiques, la valeur de grandissement en fonction des caractéristiques de pas et de taille des capteurs d'images qui sont utilisés respectivement dans ces voies optiques.

Un avantage de placer le dispositif de séparation spectrale à proximité de l'image intermédiaire est de réduire des dimensions transversales de ce dispositif de séparation spectrale, sans supprimer une partie du rayonnement qui est réfléchi par le miroir primaire. En effet, le rayonnement peut avoir, en fonction de la conception de l'instrument optique, une section de faisceau qui est minimale au niveau de l'image intermédiaire.

Avantageusement, le dispositif de séparation spectrale peut être agencé de sorte qu'un premier plan qui contient des directions d'incidence et de réflexion d'un axe optique du premier télescope au niveau du premier miroir tertiaire, et un second plan qui contient des directions d'incidence et de réflexion d'un axe optique du second télescope au niveau du second miroir tertiaire, forment entre eux un angle qui est compris entre 60° et 120°, de préférence entre 75° et 105°. Ainsi, les deux télescopes, qui sont associés un-à-un aux deux voies optiques, peuvent être entrelacés spatialement sans que des faisceaux de rayonnement qui suivent l'une des deux voies optiques ne soient interceptés par l'autre voie optique. En outre, des rayons parasites qui pourraient passer d'une voie optique à l'autre sont évités par une telle valeur importante de l'angle entre les plans de réflexion des miroirs tertiaires respectifs des deux voies optiques. Une telle disposition angulaire contribue aussi à réduire encore plus l'encombrement global de l'instrument optique.

De façon générale pour l'invention, le premier et/ou le second télescope peut (peuvent) avantageusement être de type anastigmat hors d'axe. Les avantages de ce type de télescope en termes de réduction des aberrations optiques sont alors repris dans l'instrument optique de l'invention.

De façon encore générale pour l'invention, le dispositif de séparation spectrale peut être tel que la première bande spectrale contienne un premier intervalle de longueur d'onde qui s'étend de 2,5 µm à 14 µm (micromètre), et tel que la seconde bande spectrale contienne un second intervalle de longueur d'onde qui s'étend de 0,4 µm à 2,5 µm. Autrement dit, la première bande spectrale peut correspondre sélectivement à du rayonnement infrarouge thermique, et la seconde bande spectrale peut correspondre sélectivement à une réunion de bandes spectrales de rayonnements SWIR, NIR et visible.

Selon un premier perfectionnement de l'invention, l'instrument optique peut être associé à un système de filtrage qui attribue à l'intérieur de chaque plan focal de l'instrument, des zones d'image utile respectivement à des parties restreintes de la bande spectrale à laquelle ce plan focal est dédié. Ainsi, l'instrument optique peut comprendre en outre l'un au moins parmi :
- un premier ensemble de filtres passe-bande, qui sont juxtaposés et efficaces à l'intérieur de la première bande spectrale, ce premier ensemble de filtres passe-bande étant disposé sur le trajet de la partie du rayonnement entre le dispositif de séparation spectrale et le premier miroir secondaire, à une distance du miroir primaire qui est comprise entre 0,9 et 1,2 fois la valeur de longueur focale du miroir primaire, en étant mesurée en ajoutant la distance du miroir primaire au dispositif de séparation spectrale et une distance entre ce dernier et le premier ensemble de filtres passe-bande le long de la première direction d'émergence ; et
- un second ensemble de filtres passe-bande, qui sont juxtaposés et efficaces à l'intérieur de la seconde bande spectrale, ce second ensemble de filtres passe-bande étant disposé sur le trajet de l'autre partie du rayonnement entre le dispositif de séparation spectrale et le second miroir secondaire, à une distance du miroir primaire qui est comprise entre 0,9 et 1,2 fois la valeur de longueur focale du miroir primaire, mesurée en ajoutant la distance du miroir primaire au dispositif de séparation spectrale et une distance entre ce dernier et le second ensemble de filtres passe-bande le long de la seconde direction d'émergence.

Dans ce cas, un système de balayage peut être associé à l'instrument optique, tel que chaque élément de scène qui est contenu dans le champ optique d'entrée apparaisse, dans l'image utile qui est formée par chaque voie optique munie d'un ensemble de filtres passe-bande, sélectivement par du rayonnement d'une seule des parties restreintes de la bande spectrale correspondante, puis successivement par du rayonnement de chaque autre partie restreinte de cette même bande spectrale, en se déplaçant progressivement dans le plan focal. Pour cela, l'instrument optique comprend en outre le dispositif de balayage qui est disposé pour dévier une direction de visée de l'instrument optique, et qui est orienté de sorte que l'image intermédiaire se déplace parallèlement à une direction de juxtaposition des filtres à l'intérieur de chaque ensemble de filtres, cette direction de juxtaposition étant perpendiculaire au trajet du rayonnement au niveau de l'ensemble de filtres correspondant.

Avantageusement pour le premier perfectionnement de l'invention, la distance du miroir primaire au premier ensemble de filtres passe-bande le long du trajet de la partie du rayonnement qui est dirigée vers le premier miroir secondaire, peut être comprise entre 0,9 et 1,1 fois la valeur de longueur focale du miroir primaire, lorsque cette distance est mesurée à partir de ce miroir primaire. De même, la distance du miroir primaire au second ensemble de filtres passe-bande le long du trajet de l'autre partie du rayonnement qui est dirigée vers le second miroir secondaire, peut être comprise entre 0,9 et 1,1 fois la valeur de longueur focale du miroir primaire, lorsque cette distance est mesurée à partir de ce miroir primaire.

Selon un second perfectionnement de l'invention, l'instrument optique peut comprendre en outre un dispositif de séparation spectrale supplémentaire, qui est disposé en aval de l'un des deux ensembles ré-imageurs, par exemple le second. Ce dispositif de séparation spectrale supplémentaire peut être adapté pour diriger selon une troisième direction d'émergence une première sous-partie du rayonnement dans la seconde bande spectrale sélectivement par rapport à une seconde sous-partie de ce rayonnement dans la seconde bande spectrale, et pour diriger selon une quatrième direction d'émergence la seconde sous-partie du rayonnement dans la seconde bande spectrale sélectivement par rapport à la première sous-partie du rayonnement dans la seconde bande spectrale. Ainsi, dispositif de séparation spectrale supplémentaire divise la seconde image utile conformément à deux sous-bandes spectrales différentes qui sont contenues dans la seconde bande spectrale. Par exemple, une première de ces deux sous-bandes spectrales peut contenir un troisième intervalle de longueur d'onde qui s'étend de 0,9 µm à 2,5 µm, et une seconde de ces deux sous-bandes spectrales peut contenir un quatrième intervalle de longueur d'onde qui s'étend de 0,4 µm à 0,9 µm. Autrement dit, la première sous-bande spectrale peut correspondre sélectivement à du rayonnement SWIR et une partie du rayonnement NIR, et la seconde sous-bande spectrale peut correspondre sélectivement à du rayonnement visible et une autre partie du rayonnement NIR. Pour cela, l'instrument optique peut comprendre en outre :
- un premier capteur d'images, de type HgCdTe, disposé dans le premier plan focal de l'instrument optique pour saisir la première image utile ;
- un deuxième capteur d'images, de type InGaAs, disposé dans le second plan focal de l'instrument optique, ou dans un plan qui est conjugué avec ce second plan focal à travers le dispositif de séparation spectrale supplémentaire, pour saisir une partie de la seconde image utile qui est formée avec du rayonnement dans la première sous-bande spectrale ; et
- un troisième capteur d'images, de type silicium, disposé dans le second plan focal de l'instrument optique, ou dans un plan qui est conjugué avec ce second plan focal à travers le dispositif de séparation spectrale supplémentaire, pour saisir une autre partie de la seconde image utile qui est formée avec du rayonnement dans la seconde sous-bande spectrale.

De façon générale, chaque dispositif de séparation spectrale qui est utilisé dans l'instrument optique peut être de type séparateur dichroïque.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1], déjà décrite, est un diagramme optique d'un instrument à fonction de télescope et trois voies optiques tel que connu de l'art antérieur ;
[Fig. 2] correspond à [Fig. 1] pour montrer une caractéristique d'un instrument optique conforme à l'invention ;
[Fig. 3a] est une première vue en perspective d'un instrument optique conforme à l'invention ; et
[Fig. 3b] est une seconde vue en perspective de l'instrument optique de [Fig. 3a], selon une direction de vue qui est différente de celle de [Fig. 3a].

### Description détaillée de l'invention

Pour raison de clarté, les dimensions des éléments qui sont représentés dans ces figures ne correspondent ni à des dimensions réelles, ni à des rapports de dimensions réels. En outre, des références identiques qui sont indiquées dans des figures différentes désignent des éléments identiques ou qui ont des fonctions identiques.

De plus, par souci de clarté, des composants d'instrument optique qui ne participent pas directement à la mise en oeuvre de l'invention ne sont pas décrits dans la suite, étant entendu que l'Homme du métier connaît l'utilisation de tels composants pour obtenir un instrument optique opérationnel. De tels composants peuvent être notamment un ou plusieurs diaphragme(s) pupillaire(s), un ou plusieurs diaphragme(s) de champ, une ou plusieurs lentille(s) de champ, un ou plusieurs filtre(s) supplémentaire(s), un ou plusieurs cryostat(s) pouvant être nécessaire(s) en fonction de l'application et des types de capteurs d'images utilisés, etc.

Un instrument optique conforme à l'invention comprend un premier télescope à trois miroirs, qui peut être de type anastigmat hors d'axe. Un tel premier télescope est montré dans [Fig. 2], comprenant un miroir primaire M1, un miroir secondaire M2_{TIR} et un miroir tertiaire M3_{TIR}. Le miroir primaire M1, qui est concave, forme une image intermédiaire d'un contenu du champ optique d'entrée de l'instrument dans le plan focal intermédiaire, noté PI. Puis, le miroir secondaire M2_{TIR}, qui est convexe, et le miroir tertiaire M3_{TIR}, qui est concave, constituent ensemble un ensemble ré-imageur qui produit une image utile dans un plan focal de l'instrument, noté PF_{TIR}. Autrement dit, le plan d'image intermédiaire PI et le plan focal PF_{TIR} sont conjugués par l'ensemble ré-imageur qui est formé par le miroir secondaire M2_{TIR} et le miroir tertiaire M3_{TIR}. Dans ces conditions, de façon connue, une valeur de longueur focale du miroir primaire M1, qui correspond approximativement à la distance entre le plan d'image intermédiaire PI et un sommet de ce miroir M1, est f_{M1} = R_{M1}/2, où R_{M1} est le rayon de courbure du miroir primaire M1, et la valeur de longueur focale du télescope est sensiblement égale à f_{TIR} = f_{M1} · g_{M2TIR/M3TIR}, où g_{M2TIR/M3TIR} est le grandissement de l'ensemble ré-imageur formé par le miroir secondaire M2_{TIR} et le miroir tertiaire M3_{TIR}. Le télescope formé par les miroirs M1, M2_{TIR} et M3_{TIR} a été appelé premier télescope. A_{TIR}-A_{TIR} désigne l'axe optique de ce premier télescope, et la référence 11 désigne un capteur d'images qui est situé dans le plan focal PF_{TIR} de ce premier télescope.

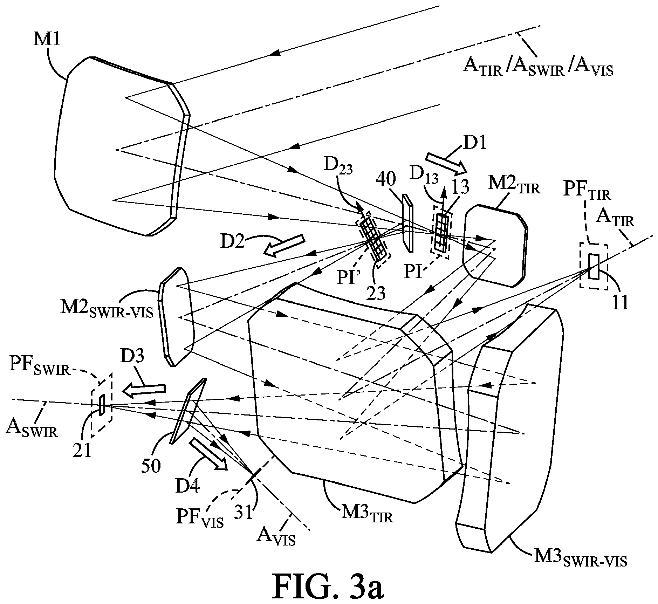

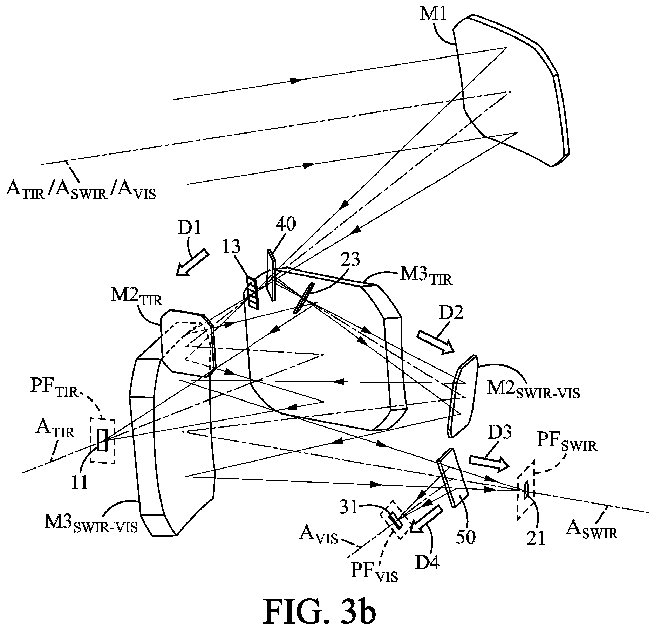

Selon l'invention, un dispositif de séparation spectrale, tel qu'un séparateur dichroïque, est placé sur le trajet du rayonnement entre le miroir primaire M1 et le miroir secondaire M2_{TIR}. Ce séparateur dichroïque est désigné par la référence 40 dans [Fig. 2] et [Fig. 3a]-[Fig. 3b]. Il peut être situé à proximité du plan d'image intermédiaire PI, à une distance du miroir primaire M1 qui est sensiblement égale à 0,9 fois la valeur f_{M1} de la longueur focale de ce miroir primaire M1. Autrement dit, le séparateur dichroïque 40 est situé à proximité du plan d'image intermédiaire Pl, de préférence un peu en amont de ce plan par rapport au sens de propagation du rayonnement entre les miroirs M1 et M2_{TIR}. Par exemple, le séparateur dichroïque 40 peut être sélectionné pour transmettre en direction du miroir secondaire M2_{TIR} du rayonnement qui appartient à la bande spectrale 2,5 µm à 14 µm, correspondant au domaine infrarouge thermique, noté TIR, et pour diriger selon une direction d'émergence différente du rayonnement qui appartient à la bande spectrale 0,4 µm à 2,5 µm, correspondant aux domaines SWIR, NIR et visible, ce dernier étant noté VIS. Cette direction d'émergence pour le rayonnement dans la bande spectrale 0,4 µm-2,5 µm est indiquée symboliquement par la flèche D2 dans [Fig. 2], et a été appelée seconde direction d'émergence dans la partie générale de la présente description. Toutefois, la direction d'émergence D2 n'est pas dans le plan de figure de [Fig. 2] pour le mode de réalisation de l'invention qui est représenté dans [Fig. 3a] et [Fig. 3b]. La direction de transmission, par le séparateur dichroïque 40 en direction du miroir secondaire M2_{TIR}, du rayonnement dans la bande spectrale 2,5 µm-14 µm est indiquée par la flèche D1, et a été appelée première direction d'émergence. La bande spectrale qui correspond à cette direction d'émergence D1, de 2,5 µm à 14 µm, a été appelée première bande spectrale, et la bande spectrale qui correspond à la direction d'émergence D2, de 0,4 µm à 2,5 µm, a été appelée seconde bande spectrale.

Un ensemble ré-imageur additionnel, formé par un autre miroir secondaire M2_{SWIR-VIS} et un autre miroir tertiaire M3_{SWIR}-_{VIS}, est ajouté pour recevoir en entrée le rayonnement qui est transmis par le séparateur dichroïque 40 dans la direction d'émergence D2. Cet ensemble ré-imageur additionnel est conçu pour former un second télescope avec le miroir primaire M1, compte tenu de la déviation causée par le séparateur dichroïque 40 pour le rayonnement qui est transmis par ce second télescope. Le miroir secondaire M2_{SWIR-VIS} est convexe, et le miroir tertiaire M3_{SWIR-VIS} est concave. La valeur de longueur focale de ce second télescope est F_{SWIR-VIS} = f_{M1} · g_{M2SWIR-VIS/M3SWIR-VIS}, où g_{M2SWIR-VIS/M3SWIR-VIS} est le grandissement de l'ensemble ré-imageur additionnel formé par le miroir secondaire M2_{SWIR-VIS} et le miroir tertiaire M3_{SWIR-VIS}. Le second télescope, qui est ainsi dédié à la seconde bande spectrale 0,4 µm-2,5 µm, peut aussi être du type anastigmat hors d'axe. Son axe optique est noté A_{SWIR}-A_{SWIR} dans [Fig. 3a] et [Fig. 3b]. De préférence, le séparateur dichroïque 40 et les ensembles ré-imageurs peuvent être disposés pour que le premier et le second télescope correspondent à des lignes de visée qui sont identiques. Autrement dit, les axes optiques A_{TIR}-A_{TIR} et A_{SWIR}-A_{SWIR} peuvent être confondus en amont du miroir primaire M1, et entre le miroir primaire M1 et le séparateur dichroïque 40.

Comme illustré dans [Fig. 3a] et [Fig. 3b], le plan de réflexion qui contient les directions d'incidence et de réflexion de l'axe optique A_{TIR}-A_{TIR} relatives au miroir tertiaire M3_{TIR} du premier télescope, et le plan de réflexion qui contient les directions d'incidence et de réflexion de l'axe optique A_{SWIR}-A_{SWIR} relatives au miroir tertiaire M3_{SWIR-VIS} du second télescope peuvent former entre eux, grâce à une orientation adéquate du séparateur dichroïque 40, un angle qui est compris entre 60° et 120°, de préférence entre 75° et 105°. Un tel angle est mesuré, de façon usuelle, dans un plan de section qui est perpendiculaire à la fois au plan de réflexion du miroir tertiaire M3_{TIR} et au plan de réflexion du miroir tertiaire M3_{SWIR-VIS}. Une telle orientation relative des ensembles ré-imageurs M2_{TIR}-M3_{TIR} et M2_{SWIR-VIS}-M3_{SWIR-VIS} permet de réduire l'encombrement de l'instrument, et de réduire une quantité de lumière parasite qui passerait d'un ensemble ré-imageur à l'autre.

Selon le premier perfectionnement optionnel de l'invention tel que mentionné dans la partie générale de la description, un premier ensemble des filtres passe-bande 13 peut être inséré sur le trajet du rayonnement entre le séparateur dichroïque 40 et le miroir secondaire M2_{TIR}. Par exemple, ce premier ensemble 13 peut être constitué de cinq filtres interférentiels, chacun de forme rectangulaire, qui sont juxtaposés dans une monture commune. Les fenêtres spectrales de transmission respectives des filtres de l'ensemble 13 sont contenues dans la bande spectrale 2,5 µm-14 µm. Cet ensemble de filtres 13 peut être situé à proximité du plan d'image intermédiaire PI, c'est-à-dire à une distance du miroir primaire M1 qui est sensiblement égale à la valeur de longueur focale f_{M1}, mesurée le long de l'axe optique A_{TIR}-A_{TIR}. De façon générale, un déplacement progressif d'une ligne de visée de l'instrument optique provoque un déplacement des images du contenu du champ optique d'entrée dans le plan d'image intermédiaire PI et dans chaque plan focal. Il est alors avantageux que l'ensemble des filtres passe-bande 13 soit orienté par rotation autour de l'axe optique A_{TIR}-A_{TIR} de sorte qu'une direction D₁₃ de juxtaposition des filtres passe-bande dans la monture de l'ensemble 13 soit parallèle à la direction de déplacement de l'image intermédiaire dans le plan Pl, tel que ce déplacement peut être provoqué par un système de balayage qui est associé à l'instrument optique. Un tel système de balayage est désigné par la référence 60 dans [Fig. 2], et peut être d'un type quelconque connu de l'Homme du métier, y compris un miroir orientable, un support orientable dédié sur lequel l'instrument optique est fixé, ou un système de contrôle d'attitude d'un satellite sur lequel l'instrument optique est fixé. La saisie d'images par le capteur 11 à plusieurs instants successifs, pour lesquels un élément de scène est imagé dans le plan d'image intermédiaire PI successivement sur chacun des filtres de l'ensemble 13, fournit une information spectrale sur cet élément de scène.

De même, un second ensemble des filtres passe-bande 23 peut être inséré sur le trajet du rayonnement entre le séparateur dichroïque 40 et le miroir secondaire M2_{SWIR-VIS}. Par exemple, ce second ensemble 23 peut être constitué de sept filtres interférentiels, chacun de forme rectangulaire, qui sont juxtaposés dans une autre monture commune. Les fenêtres spectrales de transmission respectives des filtres de l'ensemble 23 sont contenues dans la bande spectrale 0,4 µm-2,5 µm. Ce second ensemble de filtres 23 est situé sur l'axe optique A_{SWIR-VIS}-A_{SWIR-VIS} après le séparateur dichroïque 40, selon le sens de propagation du rayonnement dans le second télescope, à une distance du miroir primaire M1 qui peut être sensiblement égale à la longueur focale f_{M1}, lorsque cette distance est mesurée le long de l'axe optique A_{SWIR-VIS}-A_{SWIR-VIS}. Autrement dit, l'ensemble de filtres 23 peut être superposé à l'image PI' que forme le séparateur dichroïque 40 du plan d'image intermédiaire PI. Comme précédemment, il peut être avantageux qu'une direction D₂₃ de juxtaposition des filtres passe-bande dans la monture de l'ensemble 23 soit parallèle à la direction de déplacement, telle que produite par le système de balayage 60, de l'image intermédiaire additionnelle de la scène qui est formée dans le plan d'image intermédiaire Pl'.

Selon le second perfectionnement optionnel de l'invention tel que mentionné dans la partie générale de la description, la voie d'imagerie qui est procurée par le second télescope peut être divisée en deux voies d'imagerie secondaires, en aval du miroir tertiaire M3_{SWIR-VIS} par rapport au sens de propagation du rayonnement dans ce second télescope. Pour cela, un dispositif de séparation spectrale supplémentaire 50, qui peut être encore du type séparateur dichroïque, peut être utilisé. Ce séparateur dichroïque 50 peut être sélectionné pour transmettre selon une direction d'émergence D3 le rayonnement qui appartient à une sous-partie de la bande spectrale 0,4 µm-2,5 µm, par exemple le rayonnement qui appartient à l'intervalle de longueur d'onde 0,9 µm-2,5 µm, et pour transmettre selon une autre direction d'émergence D4, différente de D3, le rayonnement qui appartient à une sous-partie complémentaire dans la bande spectrale 0,4 µm-2,5 µm, c'est-à-dire le rayonnement qui appartient à l'intervalle de longueur d'onde 0,4 µm-0,9 µm dans l'exemple considéré. Des capteurs d'images qui sont spécialement adaptés séparément pour chacune des sous-parties de bande spectrale 0,9 µm-2,5 µm et 0,4 µm-0,9 µm peuvent ainsi être utilisés, en étant disposés dans les plans focaux PF_{SWIR} et PF_{VIS} qui résultent de l'association du second télescope avec le séparateur dichroïque 50. Les intervalles spectraux 0,9 µm-2,5 µm et 0,4 µm-0,9 µm ont été appelés respectivement première et seconde sous-bande spectrale dans la partie générale de la présente description.

Pour les valeurs numériques qui ont été citées plus haut, les types de capteurs d'images suivants peuvent être utilisés :
- un capteur d'images 11 de type HgCdTe (mercure-cadmium-tellure) dans le plan focal PF_{TIR} du premier télescope, et perpendiculairement à l'axe optique A_{TIR}-A_{TIR}. La bande spectrale correspondante, de 2,5 µm à 14 µm, qui est celle de l'infrarouge thermique, a été désignée par TIR dans la présente description,
- un capteur d'images 21 de type InGaAs (indium-galium-arsenic) dans le plan focal PF_{SWIR} du second télescope, et perpendiculairement à l'axe optique A_{SWIR}-A_{SWIR}. La bande spectrale correspondante, de 0,9 µm à 2,5 µm, est une réunion de la bande SWIR avec une partie de la bande NIR, et
- un capteur d'images 31 de type Si (silicium) dans l'image PF_{VIS} du plan focal PF_{SWIR} du second télescope qui est générée par le séparateur dichroïque 50, et perpendiculairement à l'axe optique A_{VIS}-A_{VIS}. La bande spectrale correspondante, de 0,4 µm à 0,9 µm, est une réunion d'une partie complémentaire de la bande NIR avec la bande visible, cette dernière ayant été désignée par VIS dans la présente description.

L'ensemble ré-imageur M2_{TIR}-M3_{TIR} peut être sélectionné pour avoir une valeur de grandissement qui est adaptée par rapport aux caractéristiques du capteur d'images 11 de type HgCdTe qui est utilisé avec le premier télescope. Indépendamment, l"ensemble ré-imageur M2_{SWIR-VIS}-M3_{SWIR-VIS} peut être sélectionné pour avoir une autre valeur de grandissement qui est adaptée par rapport aux caractéristiques des capteurs d'images 21 et 31, de types InGaAs et Si, respectivement, qui sont utilisés en combinaison avec le second télescope.

Il est entendu que l'invention peut être reproduite en modifiant des aspects secondaires des modes de réalisation qui ont été décrits en détail ci-dessus, tout en conservant certains au moins des avantages cités. Notamment, toutes les valeurs numériques de longueur d'onde qui ont été citées ne l'ont été qu'à titre d'illustration, et peuvent être changées en fonction de l'application considérée.

## Revendications

1. Instrument optique à fonction de télescope et à voies multiples, adapté pour former simultanément deux images à partir d'un rayonnement qui provient d'un même champ optique d'entrée, mais qui appartiennent à deux bandes spectrales différentes, une image par bande spectrale, ledit instrument optique comprenant :
- un miroir primaire (M1), de type concave, qui possède une valeur de longueur focale, et qui est adapté pour former une image intermédiaire d'un contenu du champ optique d'entrée ;
- un premier ensemble ré-imageur, qui comprend un premier miroir secondaire (M2_{TIR}) et un premier miroir tertiaire (M3_{TIR}), et qui est adapté pour former une première image utile du contenu du champ optique d'entrée dans un premier plan focal (PF_{TIR}) de l'instrument optique, l'image intermédiaire étant située entre le miroir primaire (M1) et le premier miroir secondaire le long d'un trajet des rayonnements dans l'instrument optique, ladite première image utile étant conjuguée optiquement avec l'image intermédiaire par le premier miroir secondaire et le premier miroir tertiaire ; et
- un dispositif de séparation spectrale (40), qui est adapté pour diriger selon une première direction d'émergence (D1) une partie du rayonnement appartenant à une première des deux bandes spectrales sélectivement par rapport à une autre partie du rayonnement appartenant à une seconde desdites deux bandes spectrales, et pour diriger selon une seconde direction d'émergence (D2) ladite autre partie du rayonnement appartenant à la seconde bande spectrale sélectivement par rapport à ladite partie du rayonnement appartenant à la première bande spectrale,
**caractérisé en ce que** le dispositif de séparation spectrale (40) est situé sur le trajet du rayonnement entre le miroir primaire (M1) et le premier miroir secondaire (M2_{TIR}), à une distance du miroir primaire qui est comprise entre 0,7 et 1,3 fois la valeur de longueur focale dudit miroir primaire,
le premier ensemble ré-imageur étant situé en aval du dispositif de séparation spectrale (40) dans la première direction d'émergence (D1), de sorte que la première image utile soit formée sélectivement par la partie du rayonnement qui appartient à la première bande spectrale, le miroir primaire (M1), le premier miroir secondaire (M2_{TIR}) et le premier miroir tertiaire (M3_{TIR}) formant ainsi un premier télescope qui est effectif pour ladite première bande spectrale,
et **en ce que** l'instrument optique comprend en outre :
- un second ensemble ré-imageur, qui comprend un second miroir secondaire (M2_{SWIR-VIS}) et un second miroir tertiaire (M3_{SWIR-VIS}), et qui est adapté pour former une seconde image utile du contenu du champ optique d'entrée dans un second plan focal (PF_{SWIR}) de l'instrument optique, ladite seconde image utile étant conjuguée optiquement avec l'image intermédiaire par le dispositif de séparation spectrale (40), le second miroir secondaire et le second miroir tertiaire, le second ensemble ré-imageur étant situé en aval du dispositif de séparation spectrale dans la seconde direction d'émergence (D2), de sorte que la seconde image utile soit formée sélectivement par l'autre partie du rayonnement, qui appartient à la seconde bande spectrale, le miroir primaire (M1), le second miroir secondaire et le second miroir tertiaire formant ainsi un second télescope qui est effectif pour ladite seconde bande spectrale.

2. Instrument optique selon la revendication 1, dans lequel les premier et second ensembles ré-imageurs ont des valeurs respectives de grandissement qui sont différentes, définies entre l'image intermédiaire et la première image utile pour le premier ensemble ré-imageur, et entre ladite image intermédiaire et la seconde image utile pour le second ensemble ré-imageur.

3. Instrument optique selon la revendication 1 et 2, dans lequel le dispositif de séparation spectrale (40) est agencé de sorte qu'un premier plan qui contient des directions d'incidence et de réflexion d'un axe optique du premier télescope (A_{TIR}-A_{TIR}) au niveau du premier miroir tertiaire (M3_{TIR}), et un second plan qui contient des directions d'incidence et de réflexion d'un axe optique du second télescope (A_{SWIR}-A_{SWIR}) au niveau du second miroir tertiaire (M3_{SWIR-VIS}), forment entre eux un angle qui est compris entre 60° et 120°, de préférence entre 75° et 105°.

4. Instrument optique selon l'une quelconque des revendications précédentes, dans lequel le premier et/ou le second télescope est de type anastigmat hors d'axe.

5. Instrument optique selon l'une quelconque des revendications précédentes, dans lequel le dispositif de séparation spectrale (40) est tel que la première bande spectrale contienne un premier intervalle de longueur d'onde s'étendant de 2,5 µm à 14 µm, et que la seconde bande spectrale contienne un second intervalle de longueur d'onde s'étendant de 0,4 µm à 2,5 µm.

6. Instrument optique selon l'une quelconque des revendications précédentes, comprenant en outre l'un au moins parmi :
- un premier ensemble (13) de filtres passe-bande juxtaposés et efficaces à l'intérieur de la première bande spectrale, ledit premier ensemble de filtres passe-bande étant disposé sur le trajet de la partie du rayonnement entre le dispositif de séparation spectrale (40) et le premier miroir secondaire (M2_{TIR}), à une distance du miroir primaire (M1) qui est comprise entre 0,9 et 1,2 fois la valeur de longueur focale dudit miroir primaire, ladite distance étant mesurée en ajoutant la distance du miroir primaire au dispositif de séparation spectrale et une distance entre ledit dispositif de séparation spectrale et ledit premier ensemble de filtres passe-bande le long de la première direction d'émergence (D1); et
- un second ensemble (23) de filtres passe-bande juxtaposés et efficaces à l'intérieur de la seconde bande spectrale, ledit second ensemble de filtres passe-bande étant disposé sur le trajet de l'autre partie du rayonnement entre le dispositif de séparation spectrale (40) et le second miroir secondaire (M2_{SWIR-VIS}), à une distance du miroir primaire (M1) qui est comprise entre 0,9 et 1,2 fois la valeur de longueur focale dudit miroir primaire, mesurée en ajoutant la distance du miroir primaire au dispositif de séparation spectrale et une distance entre ledit dispositif de séparation spectrale et ledit second ensemble de filtres passe-bande le long de la seconde direction d'émergence (D2).

7. Instrument optique selon la revendication 6, comprenant en outre un dispositif de balayage (60) disposé pour dévier une direction de visée de l'instrument optique, et orienté de sorte que l'image intermédiaire se déplace parallèlement à une direction de juxtaposition des filtres (D₁₃, D₂₃) à l'intérieur de chaque ensemble de filtres (13, 23), ladite direction de juxtaposition étant perpendiculaire au trajet du rayonnement au niveau de l'ensemble de filtres correspondant.

8. Instrument optique selon l'une quelconque des revendications précédentes, comprenant en outre un dispositif de séparation spectrale supplémentaire (50), qui est disposé en aval du second ensemble ré-imageur, et qui est adapté pour diriger selon une troisième direction d'émergence (D3) une première sous-partie du rayonnement dans la seconde bande spectrale sélectivement par rapport à une seconde sous-partie dudit rayonnement dans la seconde bande spectrale, et pour diriger selon une quatrième direction d'émergence (D4) la seconde sous-partie du rayonnement dans la seconde bande spectrale sélectivement par rapport à la première sous-partie du rayonnement dans la seconde bande spectrale, de façon à diviser la seconde image utile conformément à deux sous-bandes spectrales différentes qui sont contenues dans la seconde bande spectrale.

9. Instrument optique selon la revendication 8, dans lequel le dispositif de séparation spectrale supplémentaire (50) est tel qu'une première des deux sous-bandes spectrales contienne un troisième intervalle de longueur d'onde s'étendant de 0,9 µm à 2,5 µm, et qu'une seconde desdites sous-bandes spectrales contienne un quatrième intervalle de longueur d'onde s'étendant de 0,4 µm à 0,9 µm.

10. Instrument optique selon la revendication 9, comprenant en outre :
- un premier capteur d'images (11), de type HgCdTe, disposé dans le premier plan focal (PF_{TIR}) de l'instrument optique pour saisir la première image utile ;
- un deuxième capteur d'images (21), de type InGaAs, disposé dans le second plan focal (PF_{SWIR}) de l'instrument optique, ou dans un plan qui est conjugué avec ledit second plan focal à travers le dispositif de séparation spectrale supplémentaire (50), pour saisir une partie de la seconde image utile qui est formée avec du rayonnement dans la première sous-bande spectrale ; et
- un troisième capteur d'images (31), de type silicium, disposé dans le second plan focal de l'instrument optique, ou dans un plan (PF_{VIS}) qui est conjugué avec ledit second plan focal à travers le dispositif de séparation spectrale supplémentaire (50), pour saisir une autre partie de la seconde image utile qui est formée avec du rayonnement dans la seconde sous-bande spectrale.

11. Instrument optique selon l'une quelconque des revendications précédentes, dans lequel le dispositif de séparation spectrale (40), et le cas échéant le dispositif de séparation spectrale supplémentaire (50), sont chacun de type séparateur dichroïque.

## Patentansprüche

1. Optisches Instrument mit Teleskopfunktion und mehreren Kanälen, das angepasst ist, ausgehend von einer Strahlung, die von einem gleichen optischen Eintrittsfeld herkommt, die aber zu zwei unterschiedlichen Spektralbändern gehört, gleichzeitig zwei Bilder, nämlich ein Bild pro Spektralband, zu erzeugen, wobei das optische Instrument aufweist:
- einen Primärspiegel (M1) eines konkaven Typs, der einen Fokuslängenwert besitzt und der angepasst ist, ein Zwischenbild eines Inhalts des optischen Eintrittsfelds zu erzeugen;
- eine erste Wieder-Abbildungsanordnung, die einen ersten Sekundärspiegel (M2_{TIR}) und einen ersten Tertiärspiegel (M3_{TIR}) aufweist und die angepasst ist, in einer ersten Fokalebene (PF_{TIR}) des optischen Instruments ein erstes Nutzbild des Inhalts des optischen Eintrittsfelds zu erzeugen, wobei das Zwischenbild zwischen dem Primärspiegel (M1) und dem ersten Sekundärspiegel entlang eines Pfads der Strahlungen in dem optischen Instrument angeordnet ist, wobei das Nutzbild über den ersten Sekundärspiegel und den ersten Tertiärspiegel optisch konjugiert mit dem Zwischenbild ist; und
- eine Spektraltrennvorrichtung (40), die angepasst ist, einen Teil der Strahlung, der zu einem ersten von zwei Spektralbändern gehört, bezüglich eines anderen Teils der Strahlung, der zu einem zweiten der zwei Spektralbänder gehört, selektiv in eine erste Austrittsrichtung (D1) zu lenken und den anderen Teil der Strahlung, der zu dem zweiten Spektralband gehört, bezüglich des Teils der Strahlung, der zu dem ersten Spektralband gehört, selektiv in eine zweite Austrittsrichtung (D2) zu lenken,
**dadurch gekennzeichnet, dass** die Spektraltrennvorrichtung (40) auf dem Pfad der Strahlung zwischen dem Primärspiegel (M1) und dem ersten Sekundärspiegel (M2_{TIR}) in einem Abstand von dem Primärspiegel, der zwischen 0,7 und 1,3 Mal der Fokuslängenwert des Primärspiegels ist, angeordnet ist,
wobei die erste Wieder-Abbildungsanordnung in der ersten Austrittsrichtung (D1) nach der Spektraltrennvorrichtung (4) angeordnet ist, so dass das erste Nutzbild selektiv von dem Teil der Strahlung, der zu dem ersten Spektralband gehört, erzeugt wird, somit der Primärspiegel (M1), der erste Sekundärspiegel (M2_{TIR}) und der erste Tertiärspiegel (M3_{TIR}) ein erstes Teleskop bilden, das für das erste Spektralband wirksam ist,
und dadurch, dass das optische Instrument ferner aufweist:
- eine zweite Wieder-Abbildungsanordnung, die einen zweiten Sekundärspiegel (M2_{SWIR-VIS}) und einen zweiten Tertiärspiegel (M3_{SWIR-VIS}) aufweist und die angepasst ist, in einer zweiten Fokalebene (PF_{SWIR}) des optischen Instruments ein zweites Nutzbild des Inhalts des optischen Eintrittsfelds zu erzeugen, wobei das zweite Nutzbild über die Spektraltrennvorrichtung (40), den zweiten Sekundärspiegel und den zweiten Tertiärspiegel optisch konjugiert mit dem Zwischenbild ist, wobei die zweite Wieder-Abbildungsanordnung in der zweiten Austrittsrichtung (D2) nach der Spektraltrennvorrichtung angeordnet ist, so dass das zweite Nutzbild selektiv von dem anderen Teil der Strahlung, der zu dem zweiten Spektralband gehört, erzeugt wird, somit der Primärspiegel (M1), der zweite Sekundärspiegel und der zweite Tertiärspiegel ein zweites Teleskop bilden, das für das zweite Spektralband wirksam ist.

2. Optisches Instrument nach Anspruch 1, in welchem die erste und zweite Wieder-Abbildungsanordnung jeweilige Vergrößerungswerte haben, die unterschiedlich sind und die für die erste Wieder-Abbildungsanordnung zwischen dem Zwischenbild und dem ersten Nutzbild und für die zweite Wieder-Abbildungsanordnung zwischen dem Zwischenbild und dem zweiten Nutzbild definiert sind.

3. Optisches Instrument nach Anspruch 1 und 2, in welchem die Spektraltrennvorrichtung (40) derart konfiguriert ist, dass eine erste Ebene, die Einfalls- und Reflexionsrichtungen einer optischen Achse des ersten Teleskops (A_{TIR}-A_{TIR}) im Bereich des ersten Tertiärspiegels (M3_{TIR}) enthält, und eine zweite Ebene, die Einfalls- und Reflexionsrichtungen einer optischen Achse des zweiten Teleskops (A_{S-WIR}-A_{SWIR}) im Bereich des zweiten Tertiärspiegels (M3_{SWIR-VIS}) enthält, zwischen sich einen Winkel bilden, der zwischen 60° und 120°, vorzugsweise zwischen 75° und 105° beträgt.

4. Optisches Instrument nach einem der vorstehenden Ansprüche, in welchem das erste und/oder das zweite Teleskop vom Typ außeraxialer Anastigmat ist.

5. Optisches Instrument nach einem der vorstehenden Ansprüche, in welchem die Spektraltrennvorrichtung (40) derart ist, dass das erste Spektralband ein erstes Wellenlängenintervall enthält, das sich von 2,5µm bis 14µm erstreckt, und dass das zweite Spektralband ein zweites Wellenlängenintervall enthält, das sich von 0,4µm bis 2,5µm erstreckt.

6. Optisches Instrument nach einem der vorstehenden Ansprüche, ferner aufweisend
- eine erste Anordnung (13) von aneinander gereihten Bandpassfiltern, die innerhalb des ersten Spektralbands wirksam sind, wobei die erste Bandpassfilter-Anordnung auf dem Pfad des einen Teils der Strahlung zwischen der Spektraltrennvorrichtung (40) und dem ersten Sekundärspiegel (M2_{TIR}) in einem Abstand von dem Primärspiegel (M1) angeordnet ist, der zwischen 0,9 und 1,2 Mal der Fokallängenwert des Primärspiegels ist, wobei der Abstand gemessen ist durch Addieren des Abstands des Primärspiegels von der Spektraltrennvorrichtung und eines Abstands zwischen der Spektraltrennvorrichtung und der ersten Bandpassfilter-Anordnung entlang der ersten Austrittsrichtung (D1); und/oder
- eine zweite Anordnung (23) von aneinander gereihten Bandpassfiltern, die innerhalb des zweiten Spektralbands wirksam sind, wobei die zweite Bandpassfilter-Anordnung auf dem Pfad des anderen Teils der Strahlung zwischen der Spektraltrennvorrichtung (40) und dem zweiten Sekundärspiegel (M2_{SWIR-VIS}) in einem Abstand von dem Primärspiegel (M1) angeordnet ist, der zwischen 0,9 und 1,2 Mal der Fokallängenwert des Primärspiegels ist, wobei der Abstand gemessen ist durch Addieren des Abstands des Primärspiegels von der Spektraltrennvorrichtung und eines Abstands zwischen der Spektraltrennvorrichtung und der zweiten Bandpassfilter-Anordnung entlang der zweiten Austrittsrichtung (D2).

7. Optisches Instrument nach Anspruch 6, ferner aufweisend eine Abtastvorrichtung (60), die angeordnet ist, um eine Visierrichtung des optischen Instruments abzulenken, und derart orientiert ist, dass das Zwischenbild sich parallel zu einer Aufreihungsrichtung von Filtern (D₁₃, D₂₃) im Innern jeder Filteranordnung (13, 23) verschiebt, wobei die Aufreihungsrichtung senkrecht zum Pfad der Strahlung im Bereich der entsprechenden Filteranordnung ist.

8. Optisches Instrument nach einem der vorstehenden Ansprüche, ferner aufweisend eine zusätzliche Spektraltrennvorrichtung (50), die nach der zweiten Wieder-Abbildungsanordnung angeordnet ist und die angepasst ist, einen ersten Subteil der Strahlung in dem zweiten Spektralband bezüglich eines zweiten Subteils der Strahlung in dem zweiten Spektralband selektiv in eine dritte Austrittsrichtung (D3) zu lenken und den zweiten Subteil der Strahlung in dem zweiten Spektralband bezüglich des ersten Subteils der Strahlung in dem zweiten Spektralband selektiv in eine vierte Austrittsrichtung (D4) zu lenken, um so das zweite Nutzbild gemäß zweier unterschiedlicher Sub-Spektralbänder, die in dem zweiten Spektralband enthalten sind, aufzuspalten.

9. Optisches Instrument nach Anspruch 8, in welchem die zusätzliche Spektraltrennvorrichtung (50) derart ist, dass ein erstes der zwei Sub-Spektralbänder ein drittes Wellenlängenintervall enthält, das sich von 0,9µm bis 2,5µm erstreckt, und dass ein zweites der Sub-Spektralbänder ein viertes Wellenlängenintervall enthält, das sich von 0,4µm bis 0,9µm erstreckt.

10. Optisches Instrument nach Anspruch 9, ferner aufweisend:
- einen ersten Bildsensor (11) des HgCdTe-Typs, der in der ersten Fokalebene (PF_{TIR}) des optischen Instruments angeordnet ist, um das erste Nutzbild zu erfassen;
- einen zweiten Bildsensor (21) des InGaAs-Typs, der in der zweiten Fokalebene (PF_{SWIR}) des optischen Instruments oder in einer Ebene, die über die zusätzliche Spektraltrennvorrichtung (50) mit der zweiten Fokalebene konjugiert ist, angeordnet ist, um einen Teil des zweiten Nutzbilds, der mit der Strahlung in dem ersten Sub-Spektralband erzeugt ist, zu erfassen; und
- einen dritten Bildsensor (31) des Silizium-Typs, der in der zweiten Fokalebene des optischen Instruments oder in einer Ebene (PFvis), die über die zusätzliche Spektraltrennvorrichtung (50) mit der zweiten Fokalebene konjugiert ist, angeordnet ist, um einen anderen Teil des zweiten Nutzbilds, der mit der Strahlung in dem zweiten Sub-Spektralband erzeugt ist, zu erfassen.

11. Optisches Instrument nach einem der vorstehenden Ansprüche, in welchem die Spektraltrennvorrichtung (40) und, gegebenenfalls, die zusätzliche Spektraltrennvorrichtung (50) jeweils vom Typ dichroitischer Separator sind.

## Claims

1. An optical instrument with telescope function and multiple channels, adapted to simultaneously form two images from radiation which originates from a same entrance optical field, but which belong to two different spectral bands, one image per spectral band, said optical instrument comprising:
- a primary mirror (M1), of concave type, which has a focal length value, and which is adapted to form an intermediate image of a content of the entrance optical field;
- a first re-imaging assembly, which comprises a first secondary mirror (M2_{TIR}) and a first tertiary mirror (M3_{TIR}), and which is adapted to form a first useful image of the content of the entrance optical field in a first focal plane (PF_{TIR}) of the optical instrument, the intermediate image being located between the primary mirror (M1) and the first secondary mirror along a radiation path in the optical instrument, said first useful image being optically conjugated with the intermediate image by the first secondary mirror and the first tertiary mirror; and
- a spectral separation device (40), which is adapted to direct along a first emergence direction (B1) part of the radiation belonging to a first one of the two spectral bands selectively with respect to another part of the radiation belonging to a second one of said two spectral bands, and to direct along to a second emergence direction (D2) said another part of the radiation belonging to the second spectral band selectively with respect to said part of the radiation belonging to the first spectral band,
**characterised in that** the spectral separation device (40) is located on the path of the radiation between the primary mirror (M1) and the first secondary mirror (M2_{TIR}), at a distance from the primary mirror which is comprised between 0.7 and 1.3 times the focal length value of said primary mirror, the first re-imaging assembly being located downstream of the spectral separation device (40) in the first emergence direction (D1), so that the first useful image is formed selectively by the part of the radiation which belongs to the first spectral band, the primary mirror (M1), the first secondary mirror (M2_{TIR}) and the first tertiary mirror (M3_{TIR}) thus forming a first telescope which is effective for said first spectral band,
and **in that** the optical instrument further comprises:
- a second re-imaging assembly, which comprises a second secondary mirror (M2_{SWIR-VIS}) and a second tertiary mirror (M3_{SWIR-VIS}), and which is adapted to form a second useful image of the content of the entrance optical field in a second focal plane (PF_{SWIR}) of the optical instrument, said second useful image being optically conjugated with the intermediate image by the spectral separation device (40), the second secondary mirror and the second tertiary mirror, the second re-imaging assembly being located downstream of the spectral separation device in the second emergence direction (D2), so that the second useful image is formed selectively by the another part of the radiation, which belongs to the second spectral band, the primary mirror (M1), the second secondary mirror and the second tertiary mirror thus forming a second telescope which is effective for said second spectral band.

2. The optical instrument according to claim 1, wherein the first and second re-imaging assemblies have respective magnification values which are different, defined between the intermediate image and the first useful image for the first re-imaging assembly, and between said intermediate image and the second useful image for the second re-imaging assembly.

3. The optical instrument according to claim 1 and 2, wherein the spectral separation device (40) is arranged so that a first plane which contains directions of incidence and reflection of an optical axis of the first telescope (A_{TIR}-A_{TIR}) at the first tertiary mirror (M3_{TIR}), and a second plane which contains directions of incidence and reflection of an optical axis of the second telescope (A_{SWIR}-A_{SWIR}) at the second tertiary mirror (M3_{SWIR-VIS}), form between them an angle which is comprised between 60° and 120°, preferably between 75° and 105°.

4. The optical instrument according to any one of the preceding claims, wherein the first and/or the second telescope is of off-axis anastigmat type.

5. The optical instrument according to any one of the preceding claims, wherein the spectral separation device (40) is such that the first spectral band contains a first wavelength interval extending from 2.5 µm to 14 µm, and the second spectral band contains a second wavelength interval extending from 0.4 µm to 2.5 µm.

6. The optical instrument according to any one of the preceding claims, further comprising at least one of:
- a first set (13) of band-pass filters juxtaposed and effective within the first spectral band, said first set of band-pass filters being disposed on the path of the part of the radiation between the spectral separation device (40) and the first secondary mirror (M2_{TIR}), at a distance from the primary mirror (M1) which is comprised between 0.9 and 1.2 times the focal length value of said primary mirror, said distance being measured by adding the distance from the primary mirror to the spectral separation device and a distance between said spectral separation device and said first set of band-pass filters along the first emergence direction (D1); and
- a second set (23) of band-pass filters juxtaposed and effective within the second spectral band, said second set of band-pass filters being disposed on the path of the another part of the radiation between the spectral separation device (40) and the second secondary mirror (M2_{SWIR-VIS}), at a distance from the primary mirror (M1) which is comprised between 0.9 and 1.2 times the focal length value of said primary mirror, measured by adding the distance from the primary mirror to the spectral separation device and a distance between said spectral separation device and said second set of band-pass filters along the second emergence direction (D2).

7. The optical instrument according to claim 6, further comprising a scanning device (60) disposed to deflect a sight direction of the optical instrument, and oriented so that the intermediate image moves parallel to a direction of juxtaposition of the filters (D₁₃, D₂₃) within each set of filters (13, 23), said direction of juxtaposition being perpendicular to the path of the radiation at the corresponding set of filters.

8. The optical instrument according to any one of the preceding claims, further comprising an additional spectral separation device (50), which is arranged downstream of the second re-imaging assembly, and which is adapted to direct in a third emergence direction (D3) a first sub-part of the radiation in the second spectral band selectively with respect to a second sub-part of said radiation in the second spectral band, and to direct in a fourth emergence direction (D4) the second sub-part of the radiation in the second spectral band selectively with respect to the first sub-part of the radiation in the second spectral band, so as to divide the second useful image in accordance with two different spectral sub-bands which are contained in the second spectral band.

9. The optical instrument according to claim 8, wherein the additional spectral separation device (50) is such that a first of the two spectral sub-bands contains a third wavelength interval extending from 0.9 pm to 2.5 pm, and that a second of said spectral sub-bands contains a fourth wavelength interval extending from 0.4 pm to 0.9 pm.

10. The optical instrument according to claim 9, further comprising:
- a first image sensor (11), of HgCdTe-type, disposed in the first focal plane (PF_{TIR}) of the optical instrument to capture the first useful image;
- a second image sensor (21), of InGaAs-type, disposed in the second focal plane (PF_{SWIR}) of the optical instrument, or in a plane which is conjugated with said second focal plane through the additional spectral separation device (50), to capture part of the second useful image which is formed with radiation in the first spectral sub-band; and
- a third image sensor (31), of silicon-type, disposed in the second focal plane of the optical instrument, or in a plane (PF_{VIS}) which is conjugated with said second focal plane through the additional spectral separation device (50), to capture another part of the second useful image which is formed with radiation in the second spectral sub-band.

11. The optical instrument according to any one of the preceding claims, wherein the spectral separation device (40), and the additional spectral separation device (50) if any, are each of dichroic separator type.
